# EUROPÄISCHE PATENTANMELDUNG

(11) **EP 4 596 901 A1**
(43) Veröffentlichungstag der Anmeldung: **06.08.2025**
(21) Anmeldenummer: 25154682.6
(22) Anmeldetag: 29.01.2025
(51) Int. Cl.: F16B 13/06

(54) **SPREIZDÜBEL**

(30) Priorität: 04.02.2024 DE 102024103061; 07.01.2025 DE 102025100185
(71) Anmelder: fischerwerke GmbH & Co. KG, 72178 Waldachtal (DE)
(72) Erfinder: Daly, Aaron, 72285 Pfalzgrafenweiler (DE)
(74) Vertreter: Suchy, Ulrich Johannes

(57) **Zusammenfassung**

Die Erfindung betrifft einen Metall-Kunststoff-Spreizdübel (1) mit einem Grundteil (2) aus Kunststoff, das einen quer durchgehenden Längsschlitz (6) aufweist, der das Grundteil (2) in zwei gegenüberliegende, sich in einer Längsrichtung (L) des Spreizdübels (1) erstreckende erste Spreizschenkel (7) aus Kunststoff unterteilt. Erfindungsgemäß ist in dem Längsschlitz (6) ein aus Blech gestanztes und in einer Längsmitte um 180° gebogenes Einlegeteil (3) angeordnet, das zwei Paare gegenüberliegende zweite Spreizschenkel (11) aus Metall aufweist. Die zweiten Spreizschenkel (11) aus Metall liegen paarweise aneinander an und sind in einer Umfangsrichtung (U) des Spreizdübels (1) dünn, wodurch sie sich gut tordieren, das heißt um eine Längsachse (A) des Spreizdübels (1) winden und zusammen mit den ersten Spreizschenkeln (7) zu einem Knoten formen lassen, der einen guten Halt durch Hintergriff in einem Hohlraum eines Hohlbaustoffs aufweist.

## Beschreibung

Die Erfindung betrifft einen Spreizdübel mit den Merkmalen des Oberbegriffs des Anspruchs 1.

Aus der Europäischen Patentschrift EP 3 477 126 B1 ist ein Metall-Kunststoff-Spreizdübel bekannt, der ein hohlbolzenförmiges Innenteil aus Kunststoff und eine das Innenteil umschließende Metallhülse aufweist. Der Spreizdübel weist vorne einen Spreizkonus mit einem Innengewinde auf, der durch Einschrauben einer Spreizschraube in die Metallhülse eingezogen wird und das Innenteil axial staucht. Beim Stauchen knicken in einem Hohlräume aufweisenden Baustoff vier Spreizschenkel des Innenteils kniehebelartig radial nach außen und bilden eine Art Widerhaken, die den Spreizdübel durch Hintergriff in einem Hohlraum des Baustoffs halten. Jeweils zwischen den Spreizschenkeln des Innenteils weist die Metallhülse des bekannten Spreizdübels kragarmförmige Spreizschenkel auf, die der Spreizkonus radial nach außen drückt, das heißt "aufspreizt", wenn er zwischen die Spreizschenkel eingezogen wird. In einem Vollbaustoff verankern die aufgespreizten Spreizschenkel der Metallhülse den Spreizdübel durch Formschluss und oder Kraftschluss.

Aufgabe der Erfindung ist, einen Spreizdübel mit mindestens einem Spreizschenkel aus Kunststoff und mindestens zwei Spreizschenkeln aus Metall vorzuschlagen, der ein verbessertes Spreizverhalten aufweist.

Diese Aufgabe wird erfindungsgemäß durch einen Spreizdübel mit den Merkmalen des Anspruchs 1 gelöst.

Der erfindungsgemäße Spreizdübel mit den Merkmalen des Anspruchs 1 weist eine Längsachse, mindestens einen ersten Spreizschenkel aus Kunststoff und mindestens zwei zweite Spreizschenkel aus Metall auf, wobei sich der oder die ersten Spreizschenkel und die zweiten Spreizschenkel in einer Längsrichtung des Spreizdübels erstrecken. Die Längsrichtung erstreckt sich parallel zu der Längsachse des Spreizdübels, wobei sich die Spreizschenkel auch schräg in einem spitzen Winkel zu der Längsachse des Spreizdübels, das heißt mit einer Komponente in der Längsrichtung des Spreizdübels erstrecken können. In nicht aufgespreiztem Zustand erstrecken sich die Spreizschenkel vorzugsweise in einem Winkel von 0° oder nicht mehr als 10°, 12° oder 15° zur Längsachse beziehungsweise zur Längsrichtung des Spreizdübels. Die Spreizschenkel weisen eine Länge auf, die mindestens dem Doppelten des Nenndurchmessers des Spreizdübels entspricht, insbesondere eine Länge, die mindestens dem 2,5-Fachen und insbesondere mindestens dem Dreifachen des Nenndurchmessers des Spreizdübels entspricht.

Zum Aufspreizen werden die Spreizschenkel durch Einbringen eines vorzugsweise stiftförmigen Spreizelements wie beispielsweise einer Schraube oder eines Nagels entlang der Längsachse in den Spreizdübel von der Längsachse radial nach außen oder jedenfalls mit einer Komponente radial nach außen von der Längsachse des Spreizdübels weg beaufschlagt. Beim Aufspreizen werden die Spreizschenkel beispielsweise um eine zum Spreizdübel beziehungsweise zur Längsachse des Spreizdübels tangentiale Schwenkachse an einem Ende des jeweiligen Spreizschenkels nach außen geschwenkt oder beispielsweise auch insgesamt über ihre Länge, beispielsweise achsparallel oder auch überlagert mit einer Schwenkbewegung von der Längsachse des Spreizdübels weg nach außen beaufschlagt. Das Beaufschlagen der Spreizschenkel von der Längsachse des Spreizdübels weg nach außen kann als Aufspreizen der Spreizschenkel und als Aufspreizen des Spreizdübels aufgefasst werden, dessen Außendurchmesser sich beim Aufspreizen im Bereich der Spreizschenkel vergrößert.

Erfindungsgemäß sind die mindestens zwei zweiten Spreizschenkel aus Metall in einer Umfangsrichtung des Spreizdübels mehrlagig nebeneinander angeordnet und liegen aneinander an oder weisen einen Abstand voneinander in der Umfangsrichtung des Spreizdübels auf, der kleiner als ein Viertel, insbesondere kleiner als ein Achtel oder ein Zehntel eines Umfangs des Spreizdübels und vorzugsweise nicht mehr als etwa 10°, 12° oder 15° in der Umfangsrichtung des Spreizdübels ist. Ein alternatives Maß für einen maximalen Abstand der mindestens zwei zweiten Spreizschenkel voneinander ist ihre Dicke in der Umfangsrichtung des Spreizdübels. In diesem Fall beträgt ein Abstand der mindestens zwei zweiten Spreizschenkel in der Umfangsrichtung des Spreizdübels nicht mehr als das Dreifache bis Vierfache und vorzugsweise nicht mehr als das Doppelte einer Dicke oder als die Dicke eines zweiten Spreizschenkels in der Umfangsrichtung des Spreizdübels. Sofern die zweiten Spreizschenkel den Abstand in der Umfangsrichtung des Spreizdübels voneinander aufweisen, ist ein Zwischenraum zwischen den beiden zweiten Spreizschenkeln vorzugsweise frei, das heißt es befindet sich vorzugsweise nichts zwischen den beiden zweiten Spreizschenkeln.

Die erfindungsgemäße, mehrlagige Anordnung von mindestens zwei zweiten Spreizschenkeln in der Umfangsrichtung des Spreizdübels nebeneinander ermöglicht eine ausreichende Ankerkraft des Spreizdübels in einem Ankerloch in einem Ankergrund auch dann, wenn die zweiten Spreizschenkel in Umfangrichtung dünn und flach ausgestaltet sind. Die "Ankerkraft" ist ein Halt des insbesondere aufgespreizten Spreizdübels gegen Herausziehen aus dem Ankerloch. Der Halt des erfindungsgemäßen, aufgespreizten Spreizdübels gegen das Herausziehen aus dem Ankerloch ist erhöht.

Ein weiterer Vorteil der Erfindung ist, dass sich die mindestens zwei zweiten Spreizschenkel aus Metall nicht nur radial oder mit einer Komponente radial weg von der Längsachse des Spreizdübels nach außen aufspreizen lassen, sondern auch in der Umfangsrichtung des Spreizdübels um die Längsachse des Spreizdübels herum winden lassen. Dabei verkürzen sich die zweiten Spreizschenkel in der Längsrichtung des Spreizdübels insbesondere auf einen Bruchteil ihrer unverformten Erstreckung in der Längsrichtung des Spreizdübels und sie formen sich - insbesondere zusammen mit dem mindestens einen ersten Spreizschenkel aus Kunststoff - zu einer Art Knoten. Diese Knotenbildung, die insbesondere bei einer Verankerung des Spreizdübels in einem Hohlraum eines Baustoffs oder einer Wand stattfindet, kann ebenfalls als eine Art des Aufspreizens des erfindungsgemäßen Spreizdübels aufgefasst werden, die den Spreizdübel durch Formschluss/Hintergriff in dem Hohlraum des Baustoffs verankert. Durch die Knotenbildung ergibt sich eine gute Verankerung des erfindungsgemäßen Spreizdübels, wenn der Baustoff, in dem der Spreizdübel verankert wird, einen Hohlraum aufweist, in dem der Spreizdübel aufgespreizt wird.

Die abhängigen Ansprüche haben vorteilhafte Ausgestaltungen und Weiterbildungen der im Anspruch 1 angegebenen Erfindung zum Gegenstand.

In der Umfangsrichtung des Spreizdübels sind die mindestens zwei zweiten Spreizschenkel aus Metall des erfindungsgemäßen Spreizdübels vorzugsweise flacher, das heißt dünner, als sie in radialer Richtung zur Längsachse des Spreizdübels breit sind. Die zweiten Spreizschenkel aus Metall sind dadurch in der Umfangsrichtung des Spreizdübels weniger stabil als radial zum Spreizdübel. Das ermöglicht außer dem Aufspreizen radial oder mit einer Komponente radial weg von der Längsachse auch das bereits oben erläuterte Stauchen, das heißt Verkürzen der zweiten Spreizschenkel aus Metall in der Längsrichtung des Spreizdübels. Insbesondere dreht sich während des Stauchens ein Ende der zweiten Spreizschenkel aus Metall bezüglich eines anderen Endes der zweiten Spreizschenkel aus Metall in der Umfangsrichtung um die Längsachse des Spreizdübels, wodurch sich die zweiten Spreizschenkel um die Längsachse des Spreizdübels winden. Insbesondere bilden die mindestens zwei zweiten Spreizschenkel aus Metall - insbesondere zusammen mit dem mindestens einen ersten Spreizschenkel aus Kunststoff - eine Art Knoten. Diese Knotenbildung, die insbesondere in einem Hohlraum eines Baustoffs stattfindet, kann ebenfalls als eine Art des Aufspreizens des erfindungsgemäßen Spreizdübels aufgefasst werden. Gegenüber dem aus dem Stand der Technik bekannten Ausknicken hat ein Verknoten den Vorteil, dass sich die aufgespreizten Spreizschenkel besser an Flächen anpassen, die einen Hohlraum begrenzen, beispielsweise an der Rückseite eines Plattenbaustoffs, wie beispielsweise einer Gipskartonplatte, oder hinter einem Steg in einem Hochlochziegel.

In der radialen Richtung zur Längsachse des Spreizdübels sind die zweiten Spreizschenkel aus Metall bei Ausführungen der Erfindung mindestens 1,5-mal, insbesondere mindestens 1,7-mal und vorzugsweise mindestens 2-mal so breit wie sie in der Umfangsrichtung des Spreizdübels dick sind.

Eine Ausgestaltung der Erfindung sieht ein Blechbiegeteil vor, das die zweiten Spreizschenkel aus Metall aufweist. Die zweiten Spreizschenkel können beispielsweise durch Stanzen, Laserschneiden oder ein anderes Verfahren aus dem Blech getrennt sein.

Eine Ausgestaltung der Erfindung sieht vor, dass vordere Längsenden der mindestens zwei zweiten Spreizschenkel aus Metall miteinander verbunden sind derart, dass die vorderen Längsenden der mindestens zwei zweiten Spreizschenkel gemeinsam in der Längsrichtung des Spreizdübels bewegt und die zweiten Spreizschenkel gemeinsam gestaucht werden können. Das vordere Längsende ist ein einem vorderen Ende des Spreizdübels nahes Ende der mindestens zwei zweiten Spreizschenkel. Als "vorderes Ende" des Spreizdübels wird hier das Ende des Spreizdübels bezeichnet, mit dem voran der Spreizdübel in ein Ankerloch in einem Baustoff oder allgemein in einem Ankergrund eingebracht wird. Alternativ oder in Kombination sind die hinteren Längsenden der zweiten Spreizschenkel aus Metall miteinander verbunden.

Eine bevorzugte Ausführung der Erfindung sieht ein Schraubeneingriffelement an dem vorderen Längsende der zweiten Spreizschenkel vor. Das Schraubeneingriffelement dient einem Eingriff eines Schraubengewindes einer Spreizschraube, die als stiftförmiges Spreizelement zum Aufspreizen des Spreizdübels entlang der Längsachse des Spreizdübels in den Spreizdübel eingebracht und in oder durch das Schraubeneingriffelement am vorderen Längsende der zweiten Spreizschenkel geschraubt wird. Das Schraubeneingriffelement weist beispielsweise ein Innengewinde beziehungsweise ein Mutterngewinde oder einen Umfangsabschnitt mit einem oder mehreren Gewindegängen eines Innengewindes beziehungsweise Mutterngewindes für den Eingriff des Schraubengewindes der Spreizschraube auf. Es sind auch andere Schraubeneingriffelemente am vorderen Längsende der zweiten Spreizschenkel möglich, die derart ausgebildet und so angeordnet sind, dass das Schraubengewinde der Spreizschraube mit ihnen in Eingriff gelangt, wenn die Spreizschraube entlang der Längsachse in den Spreizdübel eingebracht und gedreht wird. Das Schraubeneingriffelement am vorderen Längsende der zweiten Spreizschenkel aus Metall muss keine Steigung aufweisen, sondern es muss allgemein für den Eingriff mit dem Schraubengewinde der Spreizschraube geeignet sein. Liegt die Spreizschraube beispielsweise mit ihrem Kopf am hinteren Ende des Spreizdübels an, so bewegt bei einer Drehung der Spreizschraube die Spreizschraube aufgrund des Eingriffs des Schraubeneingriffelements am vorderen Längsende der zweiten Spreizschenkel aus Metall mit dem Schraubengewinde die vorderen Längsenden der zweiten Spreizschenkel in Richtung der hinteren Längsenden der zweiten Spreizschenkel aus Metall. Dadurch werden die zweiten Spreizschenkel aus Metall in der Längsrichtung des Spreizdübels verkürzt, das heißt gestaucht beziehungsweise um die Längsachse verdreht, wobei der Spreizdübel aufspreizt.

Eine bevorzugte Ausführungsform der Erfindung sieht vor, dass die zweiten Spreizschenkel aus Metall Stege an ihren vorderen Längsenden aufweisen, die sich als Schraubeneingriffelemente für den Eingriff mit dem Schraubengewinde der Spreizschraube bogenförmig - mit oder ohne Steigung - um die Längsachse des Spreizdübels herum erstrecken und die zweiten Spreizschenkel an ihrem vorderen Längsende miteinander verbinden.

Zu einer Verbesserung einer Verankerung des erfindungsgemäßen Spreizdübels in einem Ankerloch in einem Baustoff oder allgemein in einem Ankergrund weisen die zweiten Spreizschenkel aus Metall bei Ausführungen der Erfindung Widerhaken an ihren radial äußeren, das heißt der Längsachse des Spreizdübels fernen Längsrändern auf. Die Verankerung ist ein Halt des Spreizdübels, insbesondere des aufgespreizten Spreizdübels gegen Herausziehen aus dem Ankerloch.

Für einen Eingriff mit dem Schraubengewinde der Spreizschraube sieht eine Ausgestaltung der Erfindung eine zahnstangenartige Kontur an inneren, das heißt der Längsachse des Spreizdübels zugewandten Längsrändern der zweiten Spreizschenkel aus Metall vor.

Insbesondere weist der erfindungsgemäße Spreizdübel genau zwei erste Spreizschenkel aus Kunststoff und/oder genau zwei Paare, das heißt genau vier zweite Spreizschenkel aus Metall auf. Die beiden ersten Spreizschenkel aus Kunststoff sind bei dieser Ausführung der Erfindung einander in Bezug auf die Längsachse des Spreizdübels gegenüber angeordnet. Die beiden zweiten Spreizschenkel eines Paares sind bei dieser Ausführung der Erfindung mehrlagig angeordnet. Die beiden Paare zweiter Spreizschenkel sind einander in Bezug auf die Längsachse des Spreizdübels gegenüber angeordnet.

Es können die vorderen und/oder die hinteren Längsenden der mehrlagig ohne Abstand aneinander anliegend oder in dem Abstand in der Umfangsrichtung des Spreizdübels voneinander angeordneten zweiten Spreizschenkel und/oder die einander in Bezug auf die Längsachse des Spreizdübels gegenüber angeordneten zweiten Spreizschenkel aus Metall miteinander verbunden sein.

Es sind auch Ausführungen des erfindungsgemäßen Spreizdübels mit mehr als zwei ersten Spreizschenkeln und/oder zwei Paaren zweiter Spreizschenkel möglich, wobei die Spreizschenkel gleichmäßig oder ungleichmäßig über den Umfang des Spreizdübels verteilt angeordnet sind.

Um den mindestens einen ersten Spreizschenkel aus Kunststoff leichter aufspreizen zu können, weist er bei Ausführungen der Erfindung Aussparungen, Hohlräume, Vertiefungen, Durchbrechungen oder dergleichen auf, die seine Steifigkeit gegen Biegen und Knicken und/oder gegen Tordieren verringert. Mit "Tordieren" ist das oben für die zweiten Spreizschenkel aus Metall beschriebene Winden des mindestens einen ersten Spreizschenkels aus Kunststoff um die Längsachse des Spreizdübels durch Drehen seines vorderen Längsendes in Bezug auf sein hinteres Längsende um die Längsachse des Spreizdübels gemeint. Das "Tordieren" des oder der Spreizschenkel führt zu der Formung der Spreizschenkel zu der Art Knoten.

Die ersten Spreizschenkel aus Kunststoff sind in der Umfangsrichtung des Spreizdübels vorzugsweise zwischen zweiten Spreizschenkeln aus Metall angeordnet, die einander in Bezug auf die Längsachse des Spreizdübels gegenüber angeordnet oder die jedenfalls Versatz in der Umfangsrichtung des Spreizdübels aufweisen, das heißt an verschiedenen Stellen des Umfangs des Spreizdübels angeordnet sind. In der Umfangsrichtung des Spreizdübels wechseln erste Spreizschenkel aus Kunststoff und jeweils zwei zweite, mehrlagig in der Umfangsrichtung des Spreizdübels nebeneinander angeordnete Spreizschenkel aus Metall ab.

Um zu verhindern, dass beim Aufspreizen das Einlegeteil als Gesamtes mit der Schraube mitdreht, was das Aufspreizen behindern würde, ist das Einlegeteil aus Metall zumindest an seinem hinteren Ende drehfest mit einem Grundteil verbunden, an dem der erste Spreizschenkel am Kunststoff ausgebildet ist. Das Grundteil ist insbesondere einstückig mit dem Spreizschenkel aus Kunststoff hergestellt. Insbesondere stützt sich das Einlegeteil in Umfangsrichtung und in Längsrichtung am Grundteil ab. Insbesondere ist das Einlegeteil auch vorne mit dem Grundteil drehfest verbunden und/oder es stützt sich in Längsrichtung an dem Grundteil ab.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiteren Ausführungsbeispiele aufweisen, sind möglich.

Die Erfindung wird nachfolgend anhand von zwei in der Zeichnung dargestellten Ausführungsbeispielen näher erläutert. Es zeigen:
- Figur 1: eine perspektivische Darstellung eines Spreizdübels gemäß der Erfindung;
- Figur 2: einen Achsschnitt des Spreizdübels aus Figur 1;
- Figur 3: ein Blechbiegeteil des Spreizdübels aus den Figuren 1 und 2 in einer perspektivischen Darstellung;
- Figur 4: den Spreizdübel aus den Figuren 1 und 2 in einem aufgespreizten Zustand; und
- Figur 5: eine perspektivische Darstellung eines zweiten Ausführungsbeispiels eines Spreizdübels gemäß der Erfindung.

Grundsätzlich sind in den Figuren gleiche Teile mit gleichen Bezugszahlen versehen.

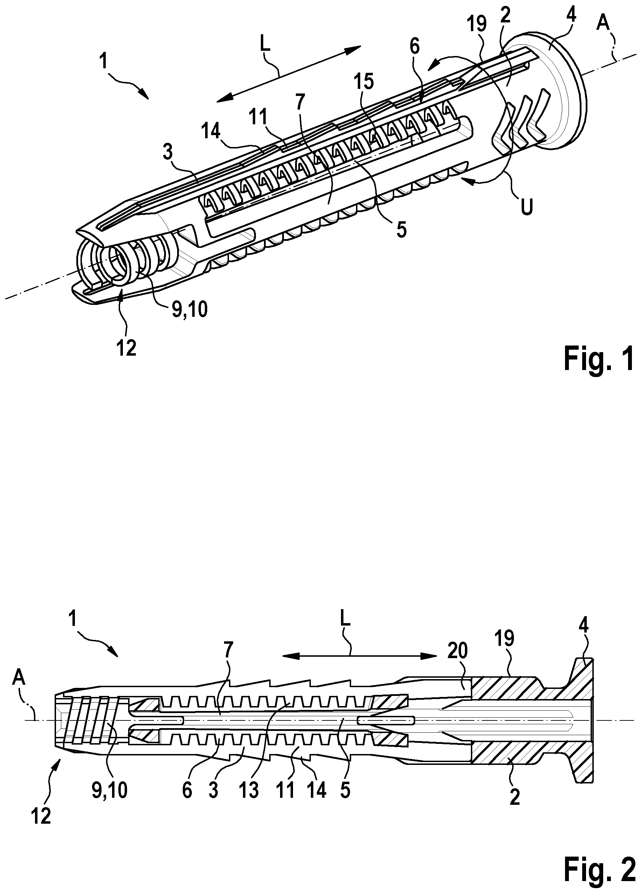

Der in den Figuren 1 und 2 dargestellte, erfindungsgemäße Spreizdübel 1 ist ein Metall-Kunststoff-Spreizdübel 1 mit einem Grundteil 2 aus Kunststoff und einem Einlegeteil 3 aus Metall.

Das Grundteil 2 weist eine Form eines typischen Spreizdübels aus Kunststoff auf: Es weist über einen größten Teil seiner Länge eine Art zylindrische Hüllfläche auf, die sich an einem vorderen Längsende, das dem vorderen Ende des Spreizdübels 1 entspricht, etwas verjüngt. Die Begriffe "vorne" und "hinten" beziehen sich grundsätzlich auf die Einbringrichtung des Spreizdübels 1 in ein nicht dargestelltes Ankerloch. Die "Hüllfläche" ist eine gedachte Umhüllende des Grundteils 2. An einem hinteren Längsende weist das Grundteil 2 eine Endhülse 19 mit einen Radialflansch 4 auf. Das Grundteil 2 ist von hinten bis vorn von einem koaxialen Schraubkanal 5 durchsetzt, der sich an mehreren Stellen von hinten nach vorn kegelstumpfförmig verjüngt. Außerdem weist das Grundteil 2 einen Längsschlitz 6 in einer Axialebene des Grundteils 2 auf, der sich von der Endhülse 19 aus über einen größten Teil einer Länge des Grundteils 2 erstreckt. In dem Längsschlitz 6 ist das Einlegeteil 3 angeordnet, das sich mit seinen hinteren Enden 20 in Längsrichtung L und in Umfangsrichtung U an der Endhülse 19 abstützt.

Der Längsschlitz 6 endet vorn in einem kurzen Abstand von etwa 1 bis 5 mm von dem vorderen Längsende und hinten in einem größeren Abstand von beispielsweise ungefähr 25 mm von dem hinteren Längsende des Grundteils 2 an der Endhülse 19. Der Längsschlitz 6 unterteilt das aus Kunststoff bestehende Grundteil 2 des erfindungsgemäßen Spreizdübels 1 in zwei erste Spreizschenkel 7 aus Kunststoff, die sich in einer Längsrichtung L des Spreizdübels 1 erstrecken. Die beiden ersten Spreizschenkel 7 befinden sich bezüglich einer Längsachse A des Spreizdübels 1, die koaxial durch das Grundteil 2 hindurch verläuft, einander gegenüber. Die Längsrichtung L verläuft axial oder achsparallel zur Längsachse A.

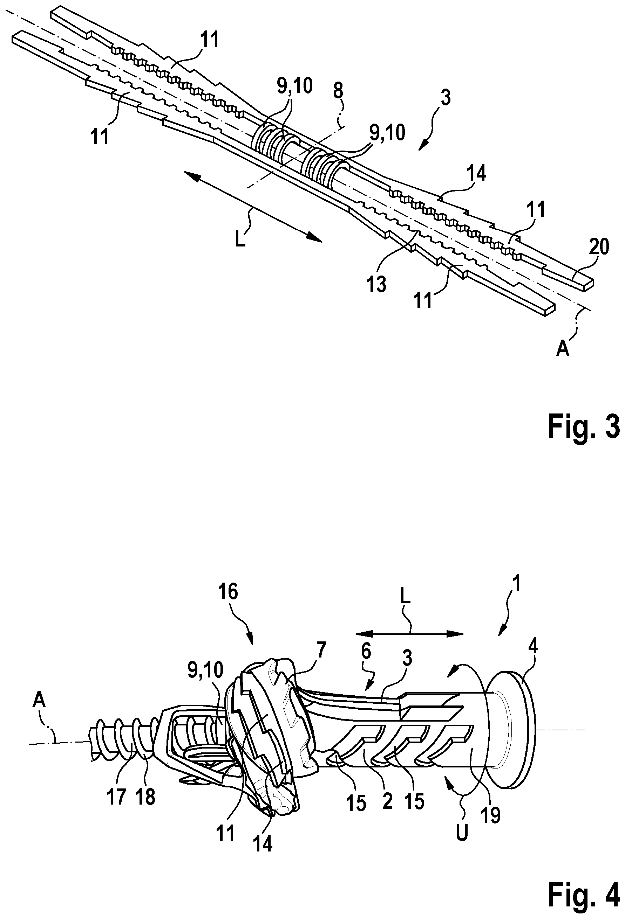

Das in Figur 3 als Einzelteil dargestellte Einlegeteil 3 ist aus einem Blech gestanzt, lasergeschnitten oder in anderer Weise aus dem Blech herausgetrennt. Nicht ausgeschlossen ist eine andere Herstellung des Einlegeteils 3 aus Metall.

Das Einlegeteil 3 weist zwei zueinander parallele Streifen auf, die in einer Ebene des Einlegeteils 3 die an einer schmalsten Stelle ungefähr so breit oder etwas breiter als eine Wanddicke des Grundteils 2 sind, im Bereich eines zweiten Spreizschenkel 11 eine maximale Breite von mehr als der 2-fachen Wanddicke sind. Die Wanddicke entspricht hier der Blechdicke. Beiderseits einer Längsmitte 8 sind die beiden Streifen des Einlegeteils 3 durch einen oder mehrere Stege 9 verbunden, die sich bogenförmig von einem zu einem anderen der beiden parallelen Streifen des Einlegeteils 3 erstrecken. Im dargestellten und beschriebenen Ausführungsbeispiel der Erfindung weist das Einlegeteil 3 auf jeder Seite seiner Längsmitte 8 drei Stege 9 auf, die sich im Ausführungsbeispiel halbkreisbogenförmig von dem einen zu dem anderen Streifen des Einlegeteils 3 erstrecken. Es sind alle Stege 9 zur gleichen Seite der Ebene des Einlegeteils 3 gewölbt und die Stege 9 weisen im Ausführungsbeispiel eine Steigung auf, was allerdings nicht zwingend für die Erfindung ist. Die Stege 9 bilden Schraubeneingriffelemente 10 für eine (nur) in Figur 4 dargestellte Spreizschraube 17, die zu einem Aufspreizen des Spreizdübels 1 in den Schraubkanal 5 schraubbar ist.

Im Ausführungsbeispiel sind in der Längsrichtung L außerhalb der Stege 9 die beiden zueinander parallelen Streifen des Einlegeteils 3 nicht miteinander verbunden.

Das Einlegeteil 3 wird um seine Längsmitte 8 um 180° zusammengebogen derart, dass seine parallelen Streifen aufeinander zu liegen kommen. Dabei werden die beiden Streifen so um 180° um ihre Längsmitten 8 gebogen, dass Längshälften jedes Streifens beiderseits der Längsmitten 8 aneinander zu liegen kommen. Die Längshälften jedes der beiden Streifen des aus Blech, das heißt aus Metall bestehenden Einlegeteils 3 bilden jeweils einen zweiten Spreizschenkel 11 derart, dass der erfindungsgemäße Spreizdübel 1 insgesamt vier zweite Spreizschenkel 11 aus Metall aufweist. Die zweiten Spreizschenkel 11 sind nahe ihren vorderen Längsenden durch die bogenförmigen Stege 9, die die Schraubeneingriffelemente 10 bilden, miteinander verbunden. Es liegen jeweils zwei zweite Spreizschenkel 11 aneinander an und es sind die beiden aneinander anliegenden zweiten Spreizschenkel 11 einander paarweise bezüglich der Längsachse A des erfindungsgemäßen Spreizdübels 1 gegenüber angeordnet.

Einander zugewandte Seiten der aneinander anliegenden zweiten Spreizschenkel 11 befinden sich an der Axialebene des Spreizdübels 1, in der das Grundteil 2 des Spreizdübels 1 den quer durch das Grundteil 2 durchgehenden Längsschlitz 6 für das Einlegeteil 3 aufweist.

Die zweiten Spreizschenkel 11 weisen Rechteckquerschnitte auf, deren Breite radial zur Längsachse A des Spreizdübels 1 sich über ihre Länge durch unten erläuterte, zahnstangenartige Konturen 13 an inneren Längsrändern der zweiten Spreizschenkel 11 und durch ebenfalls unten erläuterte Widerhaken 14 an äußeren Längsrändern der zweiten Spreizschenkel 11 ändert.

Einander zugewandte Seiten der zweiten Spreizschenkel 11 liegen aneinander an.

Anstatt das Einlegeteil 3 in den Längsschlitz 6 des Grundteils 2 einzubringen, also beispielsweise in Längsrichtung von vorne einzuschieben, kann das Einlegeteil 3 bei Ausführungen der Erfindung auch mit dem Grundteil 2 umspritzt sein.

Weil seine Stege 9 halbkreisbogenförmig gebogen und das Einlegeteil 3 um 180° um seine Längsmitte 8 gebogen ist, kann das Einlegeteil 3 auch als Blechbiegeteil aufgefasst werden. Wenn das Einlegeteil 3 durch Stanzen aus dem Blech getrennt ist, kann das Einlegeteil 3 auch als Blechstanz- und -biegeteil aufgefasst werden.

Das Einlegeteil 3 wird derart in den Längsschlitz 6 des aus Kunststoff bestehenden Grundteils 2 des erfindungsgemäßen Spreizdübels 1 eingebracht, dass sich die aus Metall bestehenden zweiten Spreizschenkel 11 in Wandungen des Grundteils 2 beiderseits des Schraubkanals 5 befinden. Die zweiten Spreizschenkel 11 verlaufen parallel zur Längsachse A des Spreizdübels 1 und in gleichen radialen Abständen zur Längsachse A des Spreizdübels 1, das heißt in der Längsrichtung L des Spreizdübels 1.

Die im Ausführungsbeispiel halbkreisbogenförmigen Stege 9 ergänzen sich durch das Biegen des Einlegeteils 3 an seiner Längsmitte 8 um 180° zu Vollkreisen, die um 360° in einer Umfangsrichtung U koaxial um die Längsachse A herum verlaufen. Aufgrund der Steigung der halbkreisbogenförmigen Stege 9 erstecken sich die Stege 9 gewindeartig mehrfach um die Längsachse A beziehungsweise um den Schraubkanal 5 herum. Wie oben beschrieben, bilden die Stege 9 Schraubeneingriffelemente 10 beziehungsweise alle Stege 9 gemeinsam ein Schraubeneingriffelement 10 für die Spreizschraube 17. Die Stege 9 beziehungsweise das/die Schraubeneingriffelement/e 10 befinden sich in einer Aussparung 12 am vorderen Längsende des Grundteils 2 des Spreizdübels 1. Die Aussparung 12 ist am vorderen Längsende des Grundteils 2 und an beiden Seiten des Grundteils 2 in einer um 90° zum Längsschlitz 6, in dem das Einlegeteil 3 beziehungsweise die zweiten Spreizschenkel 11 angeordnet ist beziehungsweise sind, um die Längsachse A des Spreizdübels 1 beziehungsweise seines Grundteils 2 versetzten Axialebene offen.

Die zweiten Spreizschenkel 11 sind in der Umfangsrichtung U zur Längsachse A des Spreizdübels 1 flacher als sie in einer radialen Richtung zur Längsachse A breit sind. Im Ausführungsbeispiel weist das Blech, aus dem das Einlegeteil 3 und damit auch die zweiten Spreizschenkel 11 bestehen, eine Dicke von 0,8 mm auf und die zweiten, aus Metall bestehenden Spreizschenkel 11 sind in der Axialebene des Spreizdübels 1 etwa 2 mm breit derart, dass die zweiten Spreizschenkel 11 radial zur Längsachse A des Spreizdübels 1 mehr als doppelt so breit sind wie sie in der Umfangsrichtung U dick sind. Allgemein sind die zweiten Spreizschenkel 11 aus Metall radial zur Längsachse A des Spreizdübels 1 mindestens etwa 1,5-mal, insbesondere mindestens etwa 1,7-mal und vorzugsweise mindestens etwa 2-mal so breit wie sie in der Umfangsrichtung U zur Längsachse A des Spreizdübels 1 dick sind.

Dem Schraubkanal 5 zugewandte innere Längsränder der zweiten, aus Metall bestehenden Spreizschenkel 11 weisen zahnstangenartige Konturen 13 auf (siehe Figuren 2 und 3), die für einen Eingriff eines Schraubengewindes 18 der Spreizschraube 17 in den Schraubkanal 5 ragen. Im Ausführungsbeispiel sind die zahnstangenartigen Konturen 13 bezüglich der Längsachse A des Spreizdübels 1 gegenüberliegender zweiter Spreizschenkel 11 jeweils um einen halben Zahn in der Längsrichtung L versetzt, das heißt in der Längsrichtung L des Spreizdübels 1 befinden sich Zähne der zahnstangenartigen Konturen 13 an den inneren Längsrändern der zweiten Spreizschenkel 11 in Höhe von Zahnzwischenräumen der gegenüberliegenden zahnstangenartigen Konturen 13.

Äußere, dem Schraubkanal 5 abgewandte Längsränder der zweiten, aus Metall bestehenden Spreizschenkel 11 weisen sägezahnförmige Widerhaken 14 für einen besseren Halt des Spreizdübels 1 in einem nicht dargestellten Ankerloch auf, die radial nach außen über einen Umfang des Grundteils 2 des Spreizdübels 1 überstehen.

Um einen Widerstand der aus Kunststoff bestehenden ersten Spreizschenkel 7 gegen ein Tordieren, gegebenenfalls auch gegen ein kniehebelartiges Ausknicken oder gegen ein Aufspreizen nach außen zu verringen, weisen die ersten Spreizschenkel 7 Aussparungen 15 nach Art von Senkungen oder Durchbrüchen auf. Mit "Tordieren" ist ein Winden der Spreizschenkel 7, 11 in der Umfangsrichtung U um die Längsachse A des Spreizdübels 1 gemeint, das die Spreizschenkel 7, 11 axial auf einen Bruchteil ihrer Länge verkürzt und zu einer Art Knoten formt (Figur 4).

Zu einer Verankerung in einem nicht dargestellten Ankerloch in einem nicht dargestellten Ankergrund wird der erfindungsgemäße Spreizdübel 1 mit seinem vorderen, sich verjüngenden Längsende voraus in das Ankerloch eingebracht, bis der Radialflansch 4 am hinteren Längsende des Spreizdübels 1 am Ankergrund anliegt. Das Ankerloch ist insbesondere zylindrisch, beispielsweise ist es in den Ankergrund gebohrt. Anschließend wird die Spreizschraube 17, die allgemein auch als stiftförmiges Spreizelement zum Aufspreizen des Spreizdübels 1 aufgefasst werden kann, vom hinteren Längsende her in den Schraubkanal 5 im Grundteil 2 des Spreizdübels 1 eingebracht und eingeschraubt. Beim Einschrauben gelangt das Schraubengewinde 18 der Spreizschaube 17 in Eingriff mit den dem Schaubkanal 5 zugewandten Innenumfangsseiten der ersten, aus Kunststoff bestehenden Spreizschenkel 7, in die sich das Schraubengewinde 18 der Spreizschraube 17 einschneidet, und das Schraubengewinde 18 der Spreizschraube 17 gelangt in Eingriff mit den zahnstangenartigen Konturen 13 an den inneren Längsrändern der zweiten, aus Metall bestehenden Spreizschenkel 11, die bei einem axialen Einziehen der Spreizschraube 17 in den Schraubkanal 5 helfen.

In einem Vollbaustoff wie beispielsweise Beton als Ankergrund spreizt die Spreizschraube 17 die ersten und die zweiten Spreizschenkel 7, 11 auf, das heißt die Spreizschraube 17 drückt die Spreizschenkel 7, 11 nach außen radial weg von der Längsachse A des Spreizdübels 1 und gegen eine Lochwand des nicht dargestellten Ankerlochs. Das Drücken der Spreizschenkel 7, 11 gegen die Lochwand des Ankerlochs bewirkt einen Kraftschluss und gegebenenfalls zusätzlich einen Formschluss der im Ankerloch aufgespreizten ersten und zweiten Spreizschenkel 7, 11 des Spreizdübels 1 mit der Lochwand des Ankerlochs, wodurch der Spreizdübel 1 im Ankerloch verankert ist beziehungsweise wird, das heißt gegen ein Herausziehen im Ankerloch gehalten ist. Die Widerhaken 14 an den äußeren Längsrändern der zweiten Spreizschenkel 11 verbessern den Halt des Spreizdübels 1 im Ankerloch.

Wird der Spreizdübel 1 in ein Ankerloch in einem Hohlbaustoff wie beispielsweise einem Lochziegel als Ankergrund eingebracht und befinden sich die Spreizschenkel 7, 11 in einem Hohlraum des Ankergrunds, zieht die Spreizschraube 17 beim Einschrauben zwischen die das beziehungsweise die Schraubeneingriffelement/e 10 bildenden, bogenförmigen Stege 9 an den vorderen Längsenden der zweiten, aus Metall bestehenden Spreizschenkel 11 axial in Richtung des hinteren Längsendes des Spreizdübels 1, sobald ein Kopf der Spreizschraube 17 (in Figur 4 verdeckt) gegen den Radialflansch drückt. Dabei ist das Einlegeteil 3 aus Metall an seinem hinteren Ende 20 drehfest mit dem Grundteil 2 verbunden, das ein Mitdrehen des gesamten Einlegeteils 3 mit der Spreizschraube 17 verhindert. Zudem stützt sich das Einlegeteil in Längsrichtung L nach hinten an der Endhülse 19 des Grundteils 2 ab. Das bedeutet, dass die vorderen Längsenden der zweiten Spreizschenkel 11 aus Metall in Richtung ihrer hinteren Längsenden 20 bewegt werden. Durch die Drehung der Spreizschraube 17 werden die vorderen Längsenden der zweiten Spreizschenkel 11 um die Spreizschraube 17 herum gedreht, wogegen die hinteren Längsenden 20 der zweiten Spreizschenkel 11 nicht mitdrehen. Dabei werden die ersten und die zweiten Spreizschenkel 7, 11 tordiert, das heißt sie werden um die Spreizschraube 17 und damit um die Längsachse A des Spreizdübels 1 gewunden, wobei sich die Spreizschenkel 7, 11 axial auf einen Bruchteil ihrer ursprünglichen Länge verkürzen und eine Art Knoten 16 bilden, der in Figur 4 dargestellt ist. Der Knoten 16 hintergreift den Hohlraum in dem Hohlbaustoff als Ankergrund und verankert dadurch den Spreizdübel 1 durch Formschluss in dem Hohlraum im Hohlbaustoff. Zusätzlich besteht ein Kraftschluss durch das Aufspreizen der Spreizschenkel 7, 11 außerhalb des Hohlraums beispielsweise in Stegen des Hohlbaustoffs.

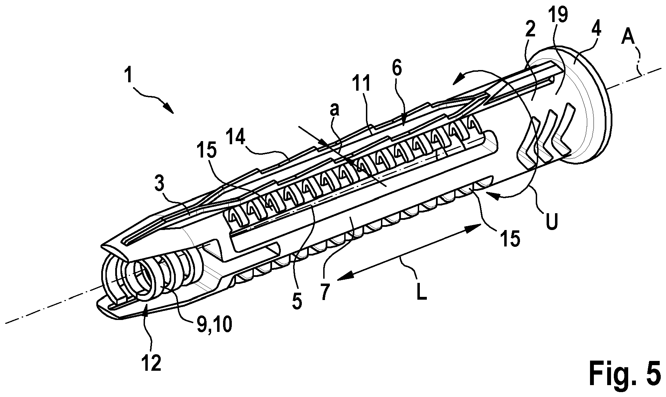

Das in Figur 5 dargestellte zweite Ausführungsbeispiel eines erfindungsgemäßen Spreizdübels 1 unterscheidet sich von dem in Figuren 1 und 2 dargestellten erfindungsgemäßen Spreizdübel 1 dadurch, dass die zweiten, aus Metall bestehenden Spreizschenkel 11 in einem Längsmittelabschnitt nicht aneinander anliegen, sondern einen Abstand a in der Umfangsrichtung U zur Längsachse A des Spreizdübels 1 aufweisen. Die zweiten Spreizschenkel 11 sind somit auch benachbart. Der Abstand a beträgt beispielsweise etwa einen oder mehrere Millimeter. Der Längsmittelabschnitt, in dem die zweiten Spreizschenkel 11 den Abstand a in der Umfangsrichtung U voneinander aufweisen, erstreckt sich beispielsweise über etwa 70 % bis 80 % einer Gesamtlänge des Spreizschenkel 11. In an die Längsenden anschließenden Längsendabschnitten liegen die zweiten Spreizschenkel 11 im Ausführungsbeispiel aneinander an.

Im Übrigen ist der in Figur 5 dargestellte, erfindungsgemäße Spreizdübel 1 gleich ausgebildet, wie der in den Figuren 1, 2 und 4 dargestellte Spreizdübel 1, so dass zur Vermeidung von Wiederholungen zur Erläuterung des in Figur 5 dargestellten Spreizdübels 1 ergänzend auf die Erläuterungen der Figuren 1 bis 4 verwiesen werden kann.

### Bezugszeichenliste

### Spreizdübel

- A: Längsachse
- L: Längsrichtung
- U: Umfangsrichtung
- a: Abstand
- 1: Spreizdübel
- 2: Grundteil
- 3: Einlegeteil
- 4: Radialflansch
- 5: Schraubkanal
- 6: Längsschlitz
- 7: erster Spreizschenkel
- 8: Längsmitte des Einlegeteils 3
- 9: Steg
- 10: Schraubeneingriffelement
- 11: zweiter Spreizschenkel
- 12: Aussparung
- 13: zahnstangenartige Kontur
- 14: Widerhaken
- 15: Aussparung
- 16: Knoten
- 17: Spreizschraube
- 18: Schraubengewinde
- 19: Endhülse des Grundteils 2
- 20: hinteres Ende des Einlegeteils 3 beziehungsweise eines zweiten Spreizschenkels 11

## Patentansprüche

1. Spreizdübel (1), mit einer Längsachse (A), mit mindestens einem sich in einer Längsrichtung (L) des Spreizdübels (1) erstreckenden ersten Spreizschenkel (7) aus Kunststoff, und mit mindestens zwei sich in der Längsrichtung (L) des Spreizdübels (1) erstreckenden zweiten Spreizschenkeln (11) aus Metall, wobei die Spreizschenkel (7, 11) durch Einbringen eines vorzugsweise stiftförmigen Spreizelements entlang der Längsachse (A) des Spreizdübels (1) nach außen, insbesondere radial weg von der Längsachse (A) bewegbar sind, **dadurch gekennzeichnet, dass** die mindestens zwei zweiten Spreizschenkel (11) in einer Umfangsrichtung (U) des Spreizdübels (1) mehrlagig nebeneinander angeordnet sind, wobei die zweiten Spreizschenkel (11) aneinander anliegen oder dass ein Abstand zwischen den mindestens zwei zweiten Spreizschenkeln (11) in der Umfangsrichtung (U) des Spreizdübels (1) kleiner als ein Viertel eines Umfangs des Spreizdübels (1) ist.

2. Spreizdübel (1) nach Anspruch 1, **dadurch gekennzeichnet, dass** die mindestens zwei zweiten Spreizschenkel (11) aus Metall in der Umfangsrichtung (U) des Spreizdübels (1) flacher als in radialer Richtung zur Längsachse (A) des Spreizdübels (1) breit sind.

3. Spreizdübel (1) nach Anspruch 2, **dadurch gekennzeichnet, dass** die zweiten Spreizschenkel (11) in der radialen Richtung zur Längsachse (A) des Spreizdübels (1) mindestens 1,5-mal, insbesondere mindestens 1,7-mal und vorzugsweise mindestens 2-mal so breit wie in der Umfangsrichtung (U) zur Längsachse (A) des Spreizdübels (1) dick sind.

4. Spreizdübel (1) nach einem oder mehreren der Ansprüche 1 bis 3, **dadurch gekennzeichnet, dass** der Spreizdübel (1) ein Blechbiegeteil aufweist, das die mindestens zwei zweiten Spreizschenkel (11) aufweist.

5. Spreizdübel (1) nach einem oder mehreren der vorhergehenden Ansprüche, **dadurch gekennzeichnet, dass** vordere Längsenden und/oder hintere Längsenden der zweiten Spreizschenkel (11) aus Metall verbunden sind.

6. Spreizdübel (1) nach einem oder mehreren der vorhergehenden Ansprüche, **dadurch gekennzeichnet, dass** die vorderen Längsenden der zweiten Spreizschenkel (11) aus Metall ein Schraubeneingriffelement (10) für einen Eingriff eines Schraubengewindes (18) einer als stiftförmiges Spreizelement eingebrachten Spreizschraube (17) entlang der Längsachse (A) des Spreizdübels (1) in den Spreizdübel (1) aufweisen.

7. Spreizdübel (1) nach Anspruch 5 und 6, **dadurch gekennzeichnet, dass** die vorderen Längsenden der zweiten Spreizschenkel (11) durch das Schraubeneingriffelement (10) miteinander verbunden sind.

8. Spreizdübel (1) nach Anspruch 7, **dadurch gekennzeichnet, dass** die vorderen Längsenden der zweiten Spreizschenkel (11) durch Stege (9) verbunden sind, die sich bogenförmig um die Längsachse (A) des Spreizdübels (1) herum erstrecken und die das Schraubeneingriffelement (10) bilden.

9. Spreizdübel (1) nach einem oder mehreren der vorhergehenden Ansprüche, **dadurch gekennzeichnet, dass** die zweiten Spreizschenkel (11) Widerhaken (14) an radial äußeren Längsrändern aufweisen.

10. Spreizdübel (1) nach einem oder mehreren der vorhergehenden Ansprüche, **dadurch gekennzeichnet, dass** radial innere Längsränder der zweiten Spreizschenkel (11) eine zahnstangenartige Kontur (13) für einen Eingriff des Schraubengewindes (18) der Spreizschraube (17) aufweisen.

11. Spreizdübel (1) nach einem oder mehreren der vorhergehenden Ansprüche, **dadurch gekennzeichnet, dass** der Spreizdübel (1) genau zwei erste Spreizschenkel (7) aus Kunststoff aufweist, die einander in Bezug auf die Längsachse (L) des Spreizdübels (1) gegenüber angeordnet sind, und/oder genau vier zweite Spreizschenkel (11) aus Metall aufweist, die paarweise aneinander anliegen oder den Abstand in der Umfangsrichtung (U) des Spreizdübels (1) von weniger als ein Viertel des Umfangs des Spreizdübels (1) voneinander aufweisen und die Paare der zweiten Spreizschenkel (11) einander in Bezug auf die Längsachse (L) des Spreizdübels (1) gegenüber angeordnet sind.

12. Spreizdübel (1) nach einem oder mehreren der vorhergehenden Ansprüche, **dadurch gekennzeichnet, dass** der mindestens eine erste Spreizschenkel (7) aus Kunststoff Aussparungen (15) aufweist, die eine Steifigkeit der ersten Spreizschenkel (7) gegen das Aufspreizen, gegen ein Ausknicken und oder gegen ein Tordieren der ersten Spreizschenkel (7) verringert.

13. Spreizdübel (1) nach einem oder mehreren der vorhergehenden Ansprüche, **dadurch gekennzeichnet, dass** die ersten Spreizschenkel (7) aus Kunststoff in der Umfangsrichtung (U) des Spreizdübels (1) zwischen zweiten, einander in Bezug auf die Längsachse (A) des Spreizdübels (1) gegenüber angeordneten oder Versatz in der Umfangsrichtung (U) des Spreizdübels (1) aufweisenden Spreizschenkeln (11) aus Metall angeordnet sind.

14. Spreizdübel (1) nach einem oder mehreren der vorhergehenden Ansprüche, **dadurch gekennzeichnet, dass** die zweiten Spreizschenkel (11) aus Metall zumindest an ihren hinteren Enden (20) drehfest mit einem Grundteil (2) verbunden ist, an dem der erste Spreizschenkel (7) am Kunststoff ausgebildet ist.
